# EUROPEAN PATENT SPECIFICATION

(11) **EP 1 859 237 B1**
(45) Date of publication and mention of the grant of the patent: **04.12.2013**
(21) Application number: 06706101.0
(22) Date of filing: 03.03.2006
(51) Int. Cl.: G01G 13/24, G01G 13/02, B65G 33/32

(54) **WEIGHING ARRANGEMENT**
WÄGEANORDNUNG
SYSTÈME DE PÉSAGE

(30) Priority: 03.03.2005 EP 05388019
(43) Date of publication of application: 28.11.2007
(60) Divisional application: 10011970.0
(73) Proprietor: CABINPLANT INTERNATIONAL A/S, DK-5683 Haarby (DK)
(72) Inventor: HANSEN, Henning, Ingemann, DK-5683 Haarby (DK)
(74) Representative: Nielsen, Henrik Sten
(86) International application number: PCT/DK2006/000130
(87) International publication number: WO 2006/092148

(56) References cited:
- EP-A- 0 287 134
- EP-A- 0 290 999
- EP-A- 1 439 379
- EP-A1- 0 060 009
- WO-A1-2004/005170
- CH-A5- 642 170
- DE-A1- 2 903 259
- DE-U1-202004 016 295
- FR-A- 2 690 131
- FR-A1- 2 266 875
- US-A- 4 796 747
- US-A- 4 872 546
- US-A- 5 101 961
- US-A- 5 143 166
- US-B1- 6 253 959

## Description

### TECHNICAL FIELD

The present invention relates to a weighing system such as a multihead weigher comprising an infeed or storage hopper (both to be named as infeed) for product material to be weighed, and at least one dosing mechanism for controlled conveying of product material portions from said infeed to a weighing system.

### BACKGROUND ART

In weighing arrangements of this kind it is known to use a dosing or batching mechanism comprising vibratory pans positioned as a trough for conveying product material from the infeed to the weighing system and to control the vibration in time and intensity in order to deliver a desired portion of product material to the weighing system. Such weighing arrangement can be used for a broad range of product materials, as long as the product materials can be conveyed by vibration in a sufficiently stable and organised manner. An alternative way of providing the delivery of desired portions of product material to a weighing system is to provide a screw conveyor in a tubular housing, which is suitable for controlled transport of particulate or pulverulent materials, such as e.g. known from EP 1 439 379. However, normal screw conveyors impose a relatively high mechanical influence on the product material. Such mechanical influence should, however, be avoided in connection with sensitive products. Thus, in connection with sensitive, sticky and/or flexible product materials, such as poultry, fish, fresh meat, marinated meat and corresponding lumpy and/or sticky materials, neither the vibrational nor the screw conveyor conveyance of the product material will be sufficiently stable, well-defined, and gentle, and will, thus, not be providing the required conveyance of these types of products.

From EP 0 287 134 is known a weighing and mixing device including a transport screw set, each transport screw being encased within a cylindrical housing and serving to deliver the product material from a hopper of the transport screw to a weigher positioned below the open free ends of the transport screws

From DE 20 2004 016 295 U1 is known a transport screw having an open trough and defining a constant pitch transport screw. The end of the open trough opposite the motor is closed and the dispensing opening of the transport screw is positioned between the motor and the trough.

From EP 0 060 009 is known a conveyor system in which a continuous spring is forced through a tubular channel system by means of a toothed wheel cooperating with the spring.

From US 5,143,166 Is known a micro weighing system, in which an infeed hopper is connected to a non-constant pitch screw conveyor encased within a dosed tubular housing.

From WO 2004/005170 is known a conveyor system in which a non-constant pitch screw conveyor is located below a hopper and delivers the material to a tubular outlet.

From FR 2 226 875 is known a method for the weighing of sticky and toxic materials comprising a supply means consisting of a sealed conduit and a helicoids. The aforementioned conduit being equipped with a vibrator.

From US 4,796,747 is known a machine for delivering a viscous or paste-like foodstuff includes a hopper for receiving the foodstuff, the lower part of which is formed to include a funnel-shaped tapered portion, and a feed sleeve rotatably connected to the lower side of the hopper and having its lower end communicating with the exterior of a machine frame on which the hopper and feed sleeve are rotatably supported. A helical delivery blade is fixedly secured to the frame by a stationary shaft and includes a first blade portion fitted in the feed sleeve and a second blade portion of larger diameter fitted In the lower part of the tapered portion of the hopper.

### DISCLOSURE OF THE INVENTION

It is the object of the present invention to provide a weighing arrangement of the kind referred to above, with which it is possible to provide a well-defined conveyance of product materials, which are not suited for vibrational conveyance, and this object is achieved with a weighing arrangement for weighing sticky and/or flexible product material, such as fresh meat, marinated meat, poultry, fish and corresponding lumpy and/or sticky materials, which according to the present invention comprises the features set forth in claim 1. Said arrangement comprises motor-driven transport screws formed as a helically shaped rod and providing a well-defined conveyance of product material from the infeed to the weighing system, even if the product material is sticky and/or flexible, or for other reasons is not suited for vibrational conveyance.

The positioning of the screw in an open trough provides a gentle conveyance, without imposing any significant mechanical influence or pressure on the product material.

### BRIEF DESCRIPTION OF THE DRAWINGS

In the following detailed part of the present description, the invention will be explained in more detail with reference to the exemplary embodiment of a weighing system according to the invention shown in the drawings, in which
Fig. 1 shows a top view of the infeed for product material and eighteen motor-driven transport screws positioned in troughs for conveying the product material from the infeed to a weighing system (not shown),
Fig. 2 shows a cross sectional view of the arrangement in Fig. 1 along A-A,
Fig. 3 shows a detail in Fig. 2 indicating an example of a connection between the motor and the transport screw.

### DESCRIPTION OF THE PREFERRED EMBODIMENTS

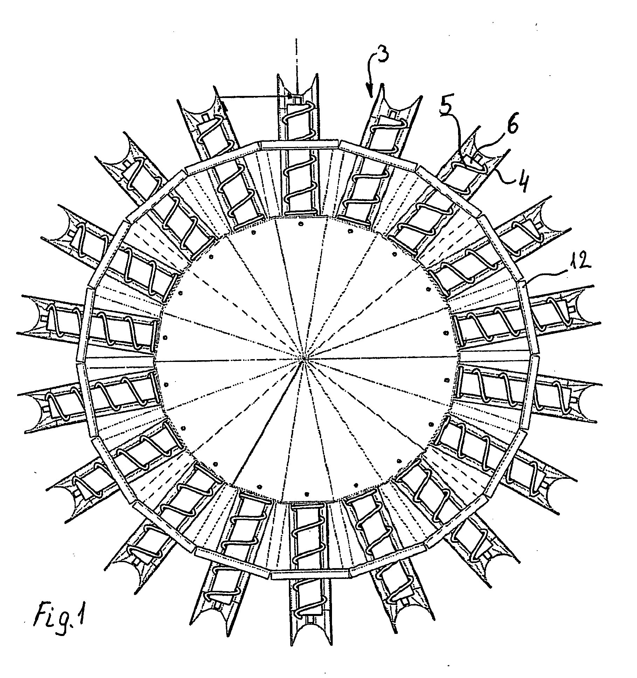

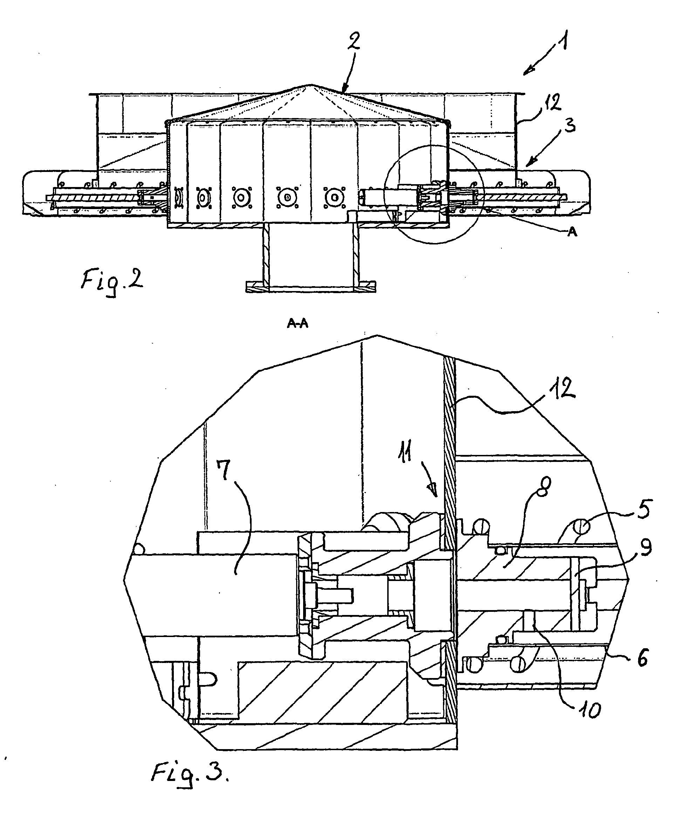

The apparatus shown in Fig. 1 comprises an infeed 1 having eighteen dosing mechanisms 3 positioned symmetrically along the circumference of the infeed 1. Each dosing mechanism 3 comprises a trough 4, in which a transport screw 5 in the form of a helically shaped rod is positioned and driven by a motor 7 (see Fig. 3). Positioned coaxially with the transport screw 5 is a core 6, which is considered to be optional and which core 6 may have any diameter less than the inner diameter of the transport screw 5.

The infeed 1, shown in cross section in Fig. 2, comprises a conical central bottom part 2, which provides a distribution of product material towards the outer wall 12 of the infeed 1. The conical central bottom part 2 of the infeed ends at a distance from the outer wall 12 of the infeed and therebetween the product material falls down into the individual troughs 4, in which the transport screw 5 and a possible core 6 are positioned to convey product material out of the infeed 1 in a controlled manner in order to deliver controlled portions of product material to a weighing system positioned below the end of the trough 4.

Preferably, the helically shaped rod has an increasing pitch along its length in order to improve the gentle transport of the product material.

As shown in Fig. 3, the connection between the motor 7 and the transport screw 5 comprises a bushing 8 onto which the transport screw 5 is connected permanently, e.g. by welding, or said bushing 8 possibly being integrated into the core 6, if present. The bushing 8 comprises a pin 9 providing a non-rotational connection to the motor-driven axle and a click-connection mechanism 10, e.g. provided by means of a spring and a ball, said ball being pressed into a recess provided in the motor axle.

In order to avoid leakage of product material from the trough 4 into the inner motor compartment, a sealing 11 is provided between the motor axle and the back wall of the trough 4.

The mounting of the motor 7 and possible provision of supplementary bearings for the axle of said motor is provided in a conventional way and needs no detailed explanation at this point.

The components in contact with the product material are preferably made of stainless steel, but other material choices can be made for different reasons, such as plastic materials, etc.

The shown apparatus functions in the following way. Product material to be weighed is conveyed to the infeed 1 in a controlled manner in order to keep a mainly constant level of product material in said infeed 1. The product material is distributed to the individual dosing mechanism 3 by the conical central bottom part 2 of the infeed. Suitable sloping surfaces between the individual troughs 4 of the dosing mechanism 3 may be provided in order to lead the product material into the individual troughs 4. The dosing mechanism 3 delivers predetermined portions of product material to the related weighing system by signals by the overall control for the weighing arrangement. The controlled, well-defined portion is delivered by the controlled speed of the motor 7 during a controlled period of time. In order to optimise the dosing, the subsequent weighing of the delivered portion is used to adjust the period of time and/or the motor speed in order to adjust the dosage of product material from each individual dosing mechanism 3.

Typical values for the rotational speed of the transport screw 5 are 10-100 revolutions per minute and typical period of running times are between 50 and 2000 ms.

The following weighing and combination of dosed partial portions to final portions shall be as close as possible to the desired weight of the final portions by combining a predetermined number of dosed and weighed portions, is well-known within the art and need not be explained in further detail.

Above, the invention has been described and explained in connection with a specific embodiment thereof, as shown in the drawings. Among natural deviations from this embodiment is another number of dosing mechanisms 3, the provision of cores 6 having a smaller diameter or completely removing the core 6 and the possibility of providing the core 6 with another outer form than the cylindrical form shown in the drawings. Furthermore, the core may be kept stationary while rotating the transport screw 5 instead of being rotated synchronously with the transport screw 5. It will also be evident that the opening in the side 12 of the infeed 1, through which the trough 4 extends, has to be adapted to the product material to be conveyed by the dosing mechanism 3.

## Claims

1. Weighing arrangement for weighing sticky and/or flexible product material, such as fresh meat, marinated meat, poultry, fish and corresponding lumpy and/or sticky materials, comprising
- an infeed (1) for product material to be weighed,
- at least one dosing mechanism (3) for controlled conveying of product material portions from said infeed (1) to a weighing system,
- said dosing mechanism (3) comprising a motor-driven (7) transport screw (5) formed as a helically shaped rod positioned in an open trough (4), for conveying the product material from the infeed (1) to the weighing system and a control unit for controlling the motor in order to deliver a desired portion of product material to the weighing system, **characterized in that** the connection between the transport screw (5) and a core (6), if present, and the motor comprises a clip-on mechanism for easy assembly, disassembly, cleaning and exchange of transport screw (5) and/or core (6).

2. Weighing arrangement in accordance with claim 1, wherein said helically shaped rod has an increasing pitch along its length.

3. Weighing arrangement in accordance with claim 1 or 2, further comprising a core (6) positioned inside the transport screw (5), said core (6) having a diameter which is less than or equal to the inner diameter of the transport screw (5).

4. Weighing arrangement in accordance with claim 3, wherein said core (6) has a mainly cylindrical form.

5. Weighing arrangement in accordance with claim 3 or 4, wherein said core (6) is rotated synchronously with the transport screw (5).

6. Weighing arrangement in accordance with claim 3 or 4, wherein said core (6) is kept stationary.

7. Weighing arrangement in accordance with any of the claims 3-6, wherein said core (6) has a fluted outer surface.

8. Weighing arrangement in accordance with any of the claims 3-7, wherein said core (6) is exchangeable in order to facilitate different diameters for conveying of a different product and/or providing different speeds of conveyance.

9. Weighing arrangement in accordance with any of the claims 1-8, wherein said trough (4) comprises a bottom part having a cylindrical form with a diameter corresponding to or larger than the outer diameter of the transport screw (5).

10. Weighing arrangement in accordance with claim 9, wherein said trough (4) extends through an opening in the side of the infeed (1).

11. Weighing arrangement in accordance with any of the claims 1-10, wherein said infeed (1) comprises a conically formed central bottom part (2) leading the product material radially outwards to several dosing mechanisms (3) positioned in a circular pattern around the conical bottom (2).

12. Weighing arrangement in accordance with claim 11, wherein the motors (7) for driving the transport screws are positioned under the conical bottom part (2) of the infeed (1).

13. Weighing arrangement in accordance with any of the claims 1-12, wherein said motor (7) is controlled in speed and running time by the controller.

14. Weighing arrangement in accordance with claim 13, wherein said controller is connected to receive information on the weight of the material portions and adapted to adjust the speed and/or running time in dependence thereof.

15. Weighing arrangement in accordance with any of the claims 1-14, wherein said arrangement comprises 2-40 dosing mechanisms (3), such as 2-4, 4-8, 8-16, 16-40, e.g. 10-20, 20-40, preferably 16 or 18 dosing mechanisms.

## Patentansprüche

1. Wägeanordnung zum Wiegen von klebrigen und/oder biegsamen Produktmaterialien, wie zum Beispiel frischem Fleisch, mariniertem Fleisch, Geflügel, Fisch und entsprechenden klumpigen und/oder klebrigen Materialien, umfassend
- eine Zuführung (1) für zu wiegendes Produktmaterial,
- mindestens einen Dosiermechanismus (3) zum gesteuerten Fördern von Produktmaterialportionen von der Zuführung (1) zu einem Wiegesystem,
- wobei der Dosiermechanismus (3) eine motorbetriebene (7) Förderschraube (5) umfasst, die als eine schraubenförmige Stange ausgebildet ist, die in einer offenen Mulde positioniert ist, um Produktmaterial von der Zuführung (1) zum Wiegesystem zu befördern, und eine Steuereinheit zum Steuern des Motors, um eine gewünschte Portion Produktmaterial zum Wiegesystem zu liefern, **dadurch gekennzeichnet, dass** die Verbindung zwischen der Förderschraube (5) und einem Kern (6), wenn vorhanden, und dem Motor einen Clipsmechanismus zum leichten Zusammenfügen, Auseinandernehmen, Reinigen und Austauschen der Förderschraube (5) und/oder des Kerns (5) umfasst.

2. Wägeanordnung nach Anspruch 1, wobei die schraubenförmige Stange entlang ihrer Länge eine zunehmende Schraubensteigung hat.

3. Wägeanordnung nach Anspruch 1 oder 2, ferner umfassend einen Kern (6), der innerhalb der Förderschraube (5) positioniert ist, wobei der Kern (6) einen Durchmesser hat, der kleiner oder gleich dem Innendurchmesser der Förderschraube (5) ist.

4. Wägeanordnung nach Anspruch 3, wobei der Kern (6) eine im Wesentlichen zylindrische Form hat.

5. Wägeanordnung nach Anspruch 3 oder 4, wobei der Kern (6) synchron mit der Förderschraube (5) gedreht wird.

6. Wägeanordnung nach Anspruch 3 oder 4, wobei der Kern (6) stationär gehalten wird.

7. Wägeanordnung nach einem der Ansprüche 3-6, wobei der Kern (6) eine geriffelte äußere Oberfläche hat.

8. Wägeanordnung nach einem der Ansprüche 3-7, wobei der Kern (6) austauschbar ist, um unterschiedliche Durchmesser zum Befördern eines unterschiedlichen Produkts und/oder zum Bereitstellen unterschiedlicher Förderdrehzahlen zu erleichtern.

9. Wägeanordnung nach einem der Ansprüche 1-8, wobei die Mulde (4) einen Bodenteil umfasst, der eine zylindrische Form mit einem Durchmesser hat, der den Außendurchmesser der Transportschraube (5) entspricht oder größer ist.

10. Wägeanordnung nach Anspruch 9, wobei sich die Mulde (4) durch eine Öffnung in der Seite der Zuführung (1) erstreckt.

11. Wägeanordnung nach einem der Ansprüche 1-10, wobei die Einführung (1) einen kegelförmig ausgebildeten Bodenteil (2) umfasst, der das Produktmaterial radial nach außen zu mehreren Dosiermechanismen (3) führt, die in einem kreisförmigen Muster um den kegelförmigen Boden (2) positioniert sind.

12. Wägeanordnung nach Anspruch 11, wobei die Motoren (7) zum Antreiben der Förderschrauben unter dem kegelförmigen Bodenteil (2) der Zuführung (1) positioniert sind.

13. Wägeanordnung nach einem der Ansprüche 1-12, wobei der Motor (7) hinsichtlich der Drehzahl und Betriebszeit von dem Controller gesteuert wird.

14. Wägeanordnung nach Anspruch 13, wobei der Controller angeschlossen, um Informationen zu dem Gewicht der Produktportionen zu empfangen und angepasst ist, um die Drehzahl und/oder Betriebszeit in Abhängigkeit davon zu regeln.

15. Wägeanordnung nach einem der Ansprüche 1-14, wobei die Anordnung 2-40 Dosiermechanismen (3), wie zum Beispiel 2-4, 4-8, 8-16, 16-40, zum Beispiel 10-20, 20-40, bevorzugt 16 oder 18 Dosiermechanismen umfasst.

## Revendications

1. Système de pesage pour peser du matériau de produit visqueux et/ou souple, tel que de la viande fraîche, de la viande marinée, de la volaille, du poisson et des matériaux grumeleux et/ou visqueux correspondants, comprenant
- un dispositif d'alimentation (1) pour le pesage du matériau de produit,
- au moins un mécanisme de dosage (3) pour le transport contrôlé de portions de matériau de produit à partir dudit dispositif d'alimentation (1) à un système de pesage,
- ledit mécanisme de dosage (3) comprenant une vis sans fin (5) motorisée (7) formé comme une tige de forme hélicoïdale positionnée dans un récepteur ouvert (4) pour transporter le matériau de produit à partir du dispositif d'alimentation (1) au système de pesage et une unité de contrôle pour contrôler le moteur de manière à délivrer une portion désirée de matériau de produit au système de pesage **caractérisé en ce que** le lien entre la vis sans fin (5) et un noyau (6), si présent, et le moteur comprend un mécanisme d'encliquetage pour faciliter le montage, le démontage, le nettoyage et le remplacement de la vis sans fin (5) et/ou du noyau (6).

2. Système de pesage selon la revendication 1, dans lequel ladite tige de forme hélicoïdale a un tangage croissant le long de sa longueur.

3. Système de pesage selon les revendications 1 ou 2, comprenant en outre un noyau (6) positionné à l'intérieur de la vis sans fin (5), ledit noyau (6) ayant un diamètre qui est inférieur ou égal au diamètre de la vis sans fin (5).

4. Système de pesage selon la revendication 3, dans lequel ledit noyau (6) a une forme essentiellement cylindrique.

5. Système de pesage selon l'une des revendications 3 ou 4, dans lequel ledit noyau (6) est tourné de manière synchronique avec la vis sans fin (5).

6. Système de pesage selon l'une des revendications 3 ou 4, dans lequel ledit noyau (6) est tenu stationnaire.

7. Système de pesage selon l'une quelconque des revendications 3 à 6, dans lequel ledit noyau (6) a une surface extérieure cannelée.

8. Système de pesage selon l'une quelconque des revendications 3 à 7, dans lequel ledit noyau (6) est remplaçable de manière à faciliter des diamètres différents pour transporter un produit différent et/ou pour fournir des vitesses différentes de transport.

9. Système de pesage selon l'une quelconque des revendications 1 à 8, dans lequel ledit récepteur (4) comprend une partie de fond ayant une forme cylindrique avec un diamètre correspondant à ou étant plus large que le diamètre extérieur de la vis sans fin (5).

10. Système de pesage selon la revendication 9, dans lequel ledit récepteur (4) s'étend à travers une ouverture dans le côté du dispositif d'alimentation (1).

11. Système de pesage selon l'une quelconque des revendications 1 à 10, dans lequel ledit dispositif d'alimentation (1) comprend une partie de fond centrale de forme conique (2) qui amène le matériau de produit vers l'extérieur de manière radiale à plusieurs mécanismes de dosage (3) positionnés en forme circulaire autour du fond conique (2).

12. Système de pesage selon la revendication 11, dans lequel les moteurs (7) qui doivent entraîner les vis de transport sont positionnés sous la partie de fond conique (2) du dispositif d'alimentation (1).

13. Système de pesage selon l'une quelconque des revendications 1 à 12, dans lequel ledit moteur (7) est contrôlé en vitesse et en temps de marche par le dispositif de commande.

14. Système de pesage selon la revendication 13, dans lequel ledit dispositif de commande est lié pour recevoir de l'information sur le poids des portions de matériau et adapté pour ajuster la vitesse et/ou le temps de marche en y dépendant.

15. Système de pesage selon l'une quelconque des revendications 1 à 14, dans lequel ledit système comprend entre 2 à 40 mécanismes de dosage (3), tel que de 2 à 4, de 4 à 8, de 8 à 16, de 16 à 40, par exemple de 10 à 20, de 20 à 40, préférablement de 16 ou 18 mécanismes de dosage.
